(19) Europäisches Patentamt
European Patent Office
Office européen des brevets

(11) **EP 2 746 778 B1**

(12) **EUROPEAN PATENT SPECIFICATION**

(45) Date of publication and mention
of the grant of the patent:
**15.06.2016 Bulletin 2016/24**

(51) Int Cl.:
***G01P 1/08*** *(2006.01)*     ***G01L 23/06*** *(2006.01)*

(21) Application number: **13198522.8**

(22) Date of filing: **19.12.2013**

(54) **Display device for vehicles**

Anzeigevorrichtung für Fahrzeuge

Dispositif d'affichage pour véhicules

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2012 JP 2012278296**

(43) Date of publication of application:
**25.06.2014 Bulletin 2014/26**

(73) Proprietor: **YAZAKI CORPORATION
Minato-ku
Tokyo 108-8333 (JP)**

(72) Inventor: **Kobayashi, Ryo
Shimada-shi, Shizuoka (JP)**

(74) Representative: **Grünecker Patent- und
Rechtsanwälte
PartG mbB
Leopoldstraße 4
80802 München (DE)**

(56) References cited:
**GB-A- 433 578**       **JP-A- 2002 022 573**
**US-A1- 2011 241 861**

**Description**

BACKGROUND

The present invention relates to a display device which is mounted and used in a vehicle.

Typically, a vehicle is mounted with a display device which includes various instruments to visually indicate present values of various state quantities of the vehicle such as vehicle speed, fuel residual amount, and supercharging pressure value (boost value) to a user.

For example, a conventional display device is known which is an instrument to indicate the supercharging pressure value as a indicated quantity, and which includes a boost meter that indicates the present measured value of the supercharging pressure as a ratio to the maximum value of the supercharging pressure by pointing to a part of a scale formed on a background plate with a rotationally driven pointer, which is driven to rotate by a motor.

GB 433 578 A discloses an analogue display part comprises a scale with marks. Furthermore GB 433 578 discloses one pointer which points to a part of the scale to indivate the normal speed and two pointers which point to a part of the scale to indicate the maximum speed acquired by the vehicle during a period just passed relatively to that indicated by the normal pointer.

US 2011/241861 A1 discloses a vehicle fuel efficiency display. A screen of this display displays a scale with a first marker that points to a part of the scale to indicate an average fuel efficiency of the vehicle and a second marker that points to a part of the scale to indicate greatest fuel efficiency of the vehicle. Furthermore. US 2011/241861 A1 discloses that the instantaneous fuel efficiency of the vehicle is represented visually by a bar.

In addition, a display device, which includes an instrument which holds to display the peak of the indicated quantity by numerically outputting with a digital display, is disclosed in the patent document 1.

[Patent document 1] JP-A-2002-22573

SUMMARY

The present invention is made in view of the above situations, and the object of the present invention is to provide such a display device that it is easy to grasp the maximum value of the indicated quantity in the past given time period.

To achieve the previously described object, the display device of the indicate invention has the following constructions.

According to one of advantageous aspects of the present invention, there is provided a display device, comprising:

an image-type display part is configured to output various information, and to be mounted and used in a vehicle, wherein the display part configured to output a scale which has marks, a first pointer which points to a part of the scale to indicate a present value of a state quantity of the vehicle, and a second pointer which points to a part of the scale to indicate the maximum value of the state quantity of the vehicle in a first time period on the past, wherein the display device further comprises a control part configured to control information to be outputted by the display part. The display device is configured such that: the display part outputs the second pointer which indicates the maximum value of the state quantity in a time period from the first time period ago until the present; when the present value exceeds the maximum value of the quantity state in the time period from the first time period ago until the present, the control part controls the display part to output the second pointer in a second time period from a exceeding time point when the present value exceeds the maximum value; and the control part controls the display part to stop outputting the second pointer when the second time period has elapsed.

The control part may control the display part to output the second pointer in the second time period from the exceeding time point so that opacity of the second pointer changes in accordance with an elapsed time from the exceeding time point.

The control part may control the display part to output the second pointer in the second time period from the exceeding time point so that a shape of the second pointer changes in accordance with an elapsed time from the exceeding time point.

With the display device of the present invention, the present indicated value of the indicated quantity is indicated by the first pointer, and the maximum value of the indicated quantity in the past given time period (the first time period) is indicated by the second pointer. Therefore, a user can grasp not only the present indicated value of the indicated quantity, but also the maximum value in the past given time period. In addition, because the present indicated value and the maximum value are indicated by using the pointers and the scale to scale-display, the user can intuitively grasp these values.

With the display device of the present invention, the second pointer indicates the maximum value of the indicated quantity in the time period from the first time ago until the present. In addition, if the present indicated value of the indicated quantity exceeds the maximum value of the indicated quantity in the time period from the first time ago until the present, the second pointer is displayed on the display part in the interval from the exceeding time point until the second time elapses, and after the interval, will not be displayed. Therefore, a user can grasp not only the present indicated value of the indicated quantity, but also the maximum value in the time period from the first time ago until the present. In addition, because the second pointer, which indicates the maximum value, is displayed only in the interval from the time point when the maximum value is exceeded until the second time elapses, the user can grasp that the second time elapses from the exceeding time point from the fact that the display of the second pointer is stopped.

With the display device of the present invention, when the present indicated value of the indicated quantity exceeds the maximum value in the time period from the first time ago until the present, and the second pointer is displayed in the display part, in the interval from the exceeding time point until the second time elapses and the second pointer is not displayed, the opacity of the second pointer changes in accordance with the elapsed time from the exceeding time point. Therefore, for example, it is possible to express in a more varied way when the second pointer disappears gradually like an animation. Because the opacity is associated with the elapsed time, a user can grasp the elapsed time from the updated time point from the opacity of the second pointer.

With the display device of the present invention, when the present indicated value of the indicated quantity exceeds the maximum value in the time period from the first time ago until the present, and the second pointer is displayed in the display part, in the interval from the exceeding time point until the second time elapses and the second pointer is not displayed, the shape of the second pointer changes in accordance with the elapsed time from the exceeding time point. Therefore, for example, it is possible to express in a more varied way when the second pointer disappears gradually like an animation. Because the shape is associated with the elapsed time, a user can grasp the elapsed time from the updated time point from the shape of the second pointer.

BRIEF DESCRIPTION OF DRAWINGS

Fig. 1 is a block diagram which shows a hardware construction example of a display device of the present embodiment.
Figs. 2A and 2B are figures which show a graphic display screen of a liquid crystal display of the display device which is shown in Fig. 1.
Fig. 3 is a graph which shows a pattern of the opacity since a second pointer fades in until the second pointer fades out.
Fig. 4 is a flowchart which shows action steps when supercharging pressure value is displayed on the liquid crystal display.
Figs. 5A to 5C are figures which show display state transition of the second pointer.
Figs. 6A to 6C are graphs which show other change pattern examples of the opacity of the second pointer.
Figs. 7A to 7C are figures which show the display state transition when the shape of the second pointer changes.

DETAILED DESCRIPTION OF EXEMPLIFIED EMBODIMENTS

In the conventional display device, because the pointer only indicates the present value of the indicated quantity, the user cannot grasp the maximum value of the indicated quantity in the past given time period. The given time period is the latest several seconds, for example.

In addition, in the display device of the patent document 1, because the numerical values must be recognized, the burden imposed on the user for the recognition may be excessive.

The present invention is made in view of the above situations, and the object of the invention is to provide such a display device that it is easy to grasp the maximum value of the indicated quantity in the past given time period.

A display device according to a present embodiment of the present invention will be described by using the figures. The display device according to the embodiment is used by being carried in a vehicle.

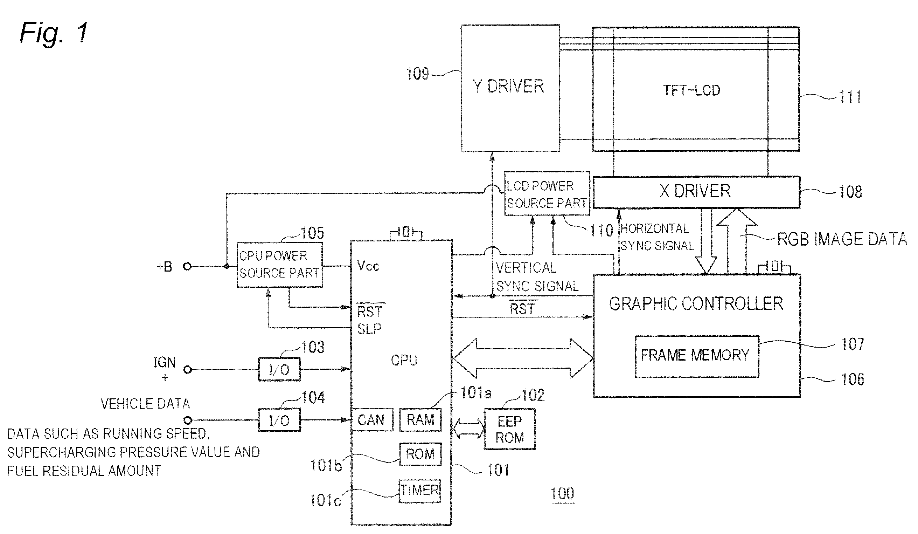

Fig. 1 is a block diagram which shows the hardware construction example of a display device 100 of the present embodiment. As shown in Fig. 1, the display device 100 includes a microcomputer (CPU: Central Processing Unit) 101, an EEPROM (Electrically Erasable Programmable Read Only Memory) 102, an interface 103, an interface 104, a CPU power source part 105, a graphic controller 106, a frame memory 107, an X driver 108, a Y driver 109, an LCD (Liquid Crystal Display) power source part 110, a liquid crystal display (TFT-LCD: Thin Film Transistor Liquid Crystal Display) 111, and the like.

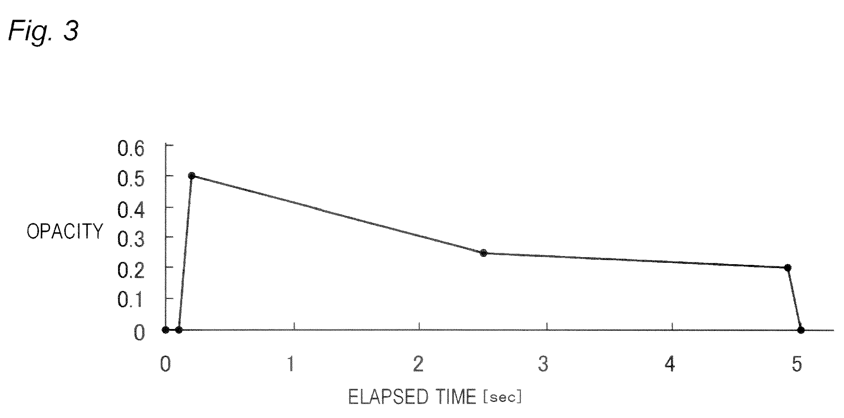

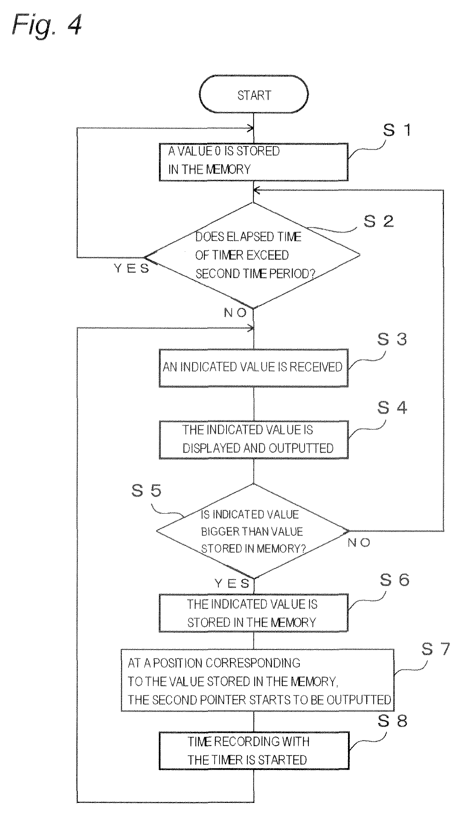

The microcomputer (CPU) 101 is a control part which executes programs prepared beforehand and performs various processes necessary to implement functions of the display device 100. For example, the microcomputer 101 performs the process shown in the flow chart of Fig. 4 to be described below. In addition, the microcomputer 101 is equipped with a RAM(Random Access Memory)101a, which stores data which are temporarily used, a ROM(Read Only Memory)101b which stores programs which are executed by the microcomputer 101, fixed data which are prepared beforehand, or the like, and a timer 101 c which counts the time elapsed since an event occurs. For example, the fixed data, which are stored in the ROM 101b, include data which show the opacity change pattern (refer to Fig. 3) of a second pointer 39 to be described below. The fixed data may be stored in the EEPROM 102 (to be described below) instead of the ROM 101b.

The EEPROM 102 is a rewritable nonvolatile memory, and holds programs, which are executed by the microcomputer 101, fixed data which are prepared beforehand or the like.

The interface 103 inputs a signal (IGN+), which indicates the state of an ignition switch at the vehicle side, into the microcomputer 101.

The interface 104 is used to perform communication between the microcomputer 101 and various control devices (ECU: Electric Control Unit) at the vehicle side according to the CAN (Controller Area Network) standard. In particular, data, which show the present values of various vehicle state quantities such as running speed, supercharging pressure value and fuel residual amount, are input into the microcomputer 101 from the vehicle side through the interface 104 as nearly real-time data. For example, each time the vehicle moves a specific amount, the interface 104 receives a vehicle speed pulse signal which is output from a speed sensor mounted at two sides of the vehicle, and outputs the vehicle speed pulse signal to the microcomputer 101 as running speed information which shows the present running speed value of the vehicle.

In addition, the interface 104 receives a signal which shows the present supercharging pressure value (boost value) which is output from a pressure sensor, which detects the pressure of air which is forcibly compressed and sent into the internal combustion engine by a supercharger, and outputs the signal to the microcomputer 101 as supercharging pressure value information which shows the present supercharging pressure value.

The CPU power source part 105 generates a DC voltage (Vcc) that is necessary for actions of the microcomputer 101 by being input a direct present electric power supplied from a plus side power line (+B) at the vehicle side. Further, the CPU power source part 105 generates a reset signal as needed, and performs an action of inhibiting power supply according to a sleep signal which is output from the microcomputer 101.

The liquid crystal display 111 is a display part, and has a colored two dimension display screen in which a large number of display microcells of a liquid crystal device, are arranged side by side in the X direction and the Y direction. The liquid crystal display 111 is an image display which, by individually controlling the display state of each of the large number of display microcells, can graphically display and output desired information such as figures, texts and images onto the two dimension display screen.

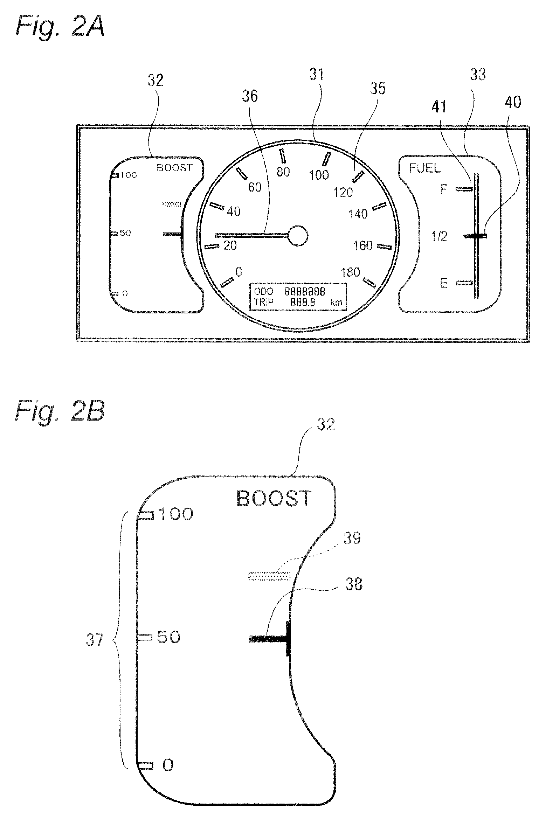

Figs. 2A and 2B are figures which show a graphic display screen of the liquid crystal display 111. As shown in Fig. 2A, the graphic display screen has a first display area 31, a second display area 32, and a third display area 33 which are displayed to be different from each other.

The first display area 31 is an area to display the present running speed of the vehicle as a speedometer. A speed scale 35 and a pointer 36 are displayed in the first display area 31. The pointer 36 indicates the present running speed of the vehicle by pointing a part of the speed scale 35.

The second display area 32 is an area to display the present supercharging pressure value (indicated quantity) and the maximum of the supercharging pressure value as a boost gauge. The supercharging pressure value, as shown by an equation (1), is indicated as a mark indicative of a ratio (percent) to a predetermined maximum value. As shown by the equation (1), "R" indicates the ratio of measured value P with respect to the boost pressure maximum value Pmax.

$$[\text{EQUATION} 1]$$

$$R \ [\%] = P \ [\text{kgf/cm}^2] \cdot 100 \ / \ Pmax \ [\text{kgf/cm}^2] \quad (1)$$

As shown in Fig. 2B, a pressure value scale 37, a first pointer 38, and a second pointer 39 are displayed in the second display area 32.

The pressure value scale 37 is arranged at the left end of the second display area 32 and extends in the vertical direction of Figs. 2A and 2B. In addition, the pressure value scale 37 is provided with marks which show ratios of 0, 50 and 100.

The first pointer 38 is a rod-like display element which extends in a horizontal direction in Figs. 2A and 2B, is arranged to the right of the pressure value scale 37 (at the right end of the second display area 32) with only a given distance from the pressure value scale 37, and moves in a vertical direction along the pressure value scale 37 over time. The first pointer 38 points a part of the pressure value scale 37, and indicates an indicated value which is the present value of the supercharging pressure value. That is, the present value of the supercharging pressure value is scale-displayed. For example, in Fig. 2B, the indicated value is 50.

The second pointer 39, like the first pointer, is a rod-like display element which extends in the vertical direction in Figs. 2A and 2B. The second pointer 39 points a part of the pressure value scale 37, and indicates the maximum value of the supercharging pressure value in the latest given time period (a first time period) to be described below. That is, the maximum value of the supercharging pressure value is scale-displayed. For example, in Fig. 2B, the indicated value is about 70. The second pointer 39 is displayed with the same color as that of the first pointer 38 and the pressure value scale 37, or displayed with a color different from that of the first pointer 38 and the pressure value scale 37.

When the present indicated value of the supercharging pressure value exceeds the maximum value in the latest time period, the second pointer 39 is displayed in the second display area in a time period from the exceeding time point (hereinafter referred to as updated time point) until a predetermined time (a second time period, five seconds in the embodiment) elapses, and after the time period, the second pointer 39 will not be displayed. In addition, after the updated time point, the opacity of the second pointer 39 decreases gradually with the elapse of time from the maximum value (50% in the embodiment) in accordance with the change pattern to be described below, and, when the second time period elapses, becomes 0% and the second pointer 39 will not be displayed. Therefore, after the updated time point, the second pointer 39 starts to display by fading in and stops displaying by fading out, and it is possible to indicate like an animation.

Fig. 3 is a graph which shows a change pattern of the opacity since the second pointer 39 fades in until the second pointer 39 fades out. In the change pattern, since time recording is started when the present indicated value of the supercharging pressure value exceeds the maximum value in the latest time period until 100 milliseconds, the opacity is 0 (that is, kept at 0%). From 100 milliseconds to 200 milliseconds, the opacity becomes 0.5 (50%), and the second pointer 39 fades in. Then, from 200 milliseconds to 2,500 milliseconds, the second pointer 39 fades out so that the opacity decreases to 0.25 (25%), and from 2,500 milliseconds to 4,900 milliseconds, the second pointer 39 fades out so that the opacity decreases to 0.2 (20%). In the last 100 milliseconds, that is, from 4,900 milliseconds to 5,000 milliseconds, the second pointer 39 fades out completely so that the opacity decreases to 0 (0%).

In the above example, the maximum value of the opacity is set to 50%, but also may be set to 80%, 40% or an arbitrary value. In addition, five seconds is set as the given time (the second time period) from the updated time point until the second pointer 39 is not displayed, but an arbitrary time such as 10 seconds or 20 seconds may be set as the second time period. Display actions of the second pointer 39 will be described in detail below.

The third display area 33 is an area to display the present fuel residual amount as a fuel meter. A fuel scale 41 and a bar 40 are displayed in the third display area 33. The bar 40 shows the present fuel residual amount by pointing a part of the fuel scale 41.

Scanning positions of the Y direction of the display screen of the liquid crystal display 111 are sequentially switched by the output of the Y driver 109. The Y driver 109 sequentially switches the scanning positions of the Y direction in sync with a vertical sync signal output from the graphic controller 106.

The X driver 108 sequentially switches the scanning positions of the X direction of the display screen of the liquid crystal display 111 in sync with a horizontal sync signal output from the graphic controller 106. The X driver 108 controls the display contents in the screen by giving image data of RGB colors output from the graphic controller 106 to display cells of the scanning positions.

The graphic controller 106 displays various graphic elements on the screen of the liquid crystal display 111 according to various instructions input from the microcomputer 101. In fact, the microcomputer 101 or the graphic controller 106 writes display data into the frame memory 107 that holds the display contents for each of the pixels, and performs graphic drawing. The graphic controller 106 generates the vertical sync signal and the horizontal sync signal for scanning the screen of the liquid crystal display 111 in two dimensions, and gives display data stored in corresponding addresses in the frame memory 107 to the liquid crystal display 111 at timings in sync with these sync signals. That is, the microcomputer 101 controls the output contents of the liquid crystal display 111 through the graphic controller 106.

The LCD power source part 110 is input direct present electric power supplied from a plus side power line (+B) at the vehicle side to generate predetermined direct present electric power that is necessary for the display of the liquid crystal display 111.

Specific actions of the display device 100, which has the above construction, are shown. Fig. 4 is a flowchart which shows action steps when the supercharging pressure value is displayed as an indicated value. The action program is stored in the ROM 102b, and is performed by the microcomputer (CPU) 101.

First, a user turns on the ignition switch. The microcomputer 101, to which a direct voltage (Vcc) is supplied, starts to display various information, which includes the speed information, the supercharging pressure value and the fuel value, in the first display area 31 to the third display area 33. Next, the display control in the second display area 32, which is to display the supercharging pressure value, will be particularly described.

In a step S1, the microcomputer 101 stores a value 0 in the RAM 101a as an initial value of the maximum indicated value which is to be described below, and reset to initialize the elapsed time of the timer 101 c to a value 0.

In a step S2, the microcomputer 101 judges whether the elapsed time of the timer 101c exceeds the second time period (five seconds). Because the timer 101 c does not operate at the start of the routine, the elapsed time does not exceed the determined time. When the elapsed time exceeds the second time period, the microcomputer 101 returns to the step S1 to perform the action described above.

On the other hand, when the elapsed time of the timer 101c does not exceed the second time period, the microcomputer 101 performs the process of a step S3 to obtain supercharging pressure value information, which indicates the present supercharging pressure value of the vehicle, through the interface 104. In a step S4, based on the obtained supercharging pressure value information, the microcomputer 101 calculates a mark position (indicated value) on the pressure value scale 37 in accordance with the equation (1) described above, and transfers the data of the indicated value, which correspond to the mark position, to the frame memory 107.

Based on the data of the indicated value which has been stored in the frame memory 107, the graphic controller 106 controls the display to change the vertical position of the first pointer 38 on the pressure value scale 37.

In a step S5, the microcomputer 101 judges whether the present indicated value, which is obtained in the step S3, is bigger than the maximum value of the indicated values which is stored in the RAM 101 a. If the present indicated value is not bigger than the maximum value which is stored in the RAM 101a, the microcomputer 101 returns to the process of the step S2.

On the other hand, when the present indicated value exceeds the indicated value which is stored in the RAM 101a in the step S5, in a step S6, the microcomputer 101a overwrites the maximum value of the indicated values, which is stored in the RAM 101A with the present indicated value. At the start of the processing routine, if the maximum value of the indicated values, which is stored in the RAM 101a, does not exist in the step S5, the microcomputer 101 directly stores the present indicated value in the RAM 101a as the maximum value of the indicated values in the step S6.

In a step S7, the microcomputer 101 transfers the maximum value of the indicated values, which is stored in the RAM 101a, and the change pattern of the opacity, which is obtained by referring to the ROM 101 b, to the frame memory 107. Based on the maximum value of the indicated values and the change pattern of the opacity, which are stored in the frame memory 107, the graphic controller 106 starts to control the display of the second pointer 39. Thereby, in the time period from this time point until the second time period elapses, the second pointer 39 is outputted to the liquid crystal display 111 so that the opacity of the second pointer 39 decreases in accordance with elapsed time from this time point.

In the following step S8, the microcomputer 101 is made to start time recording with the timer 101 c, and returns to the process of the step S3.

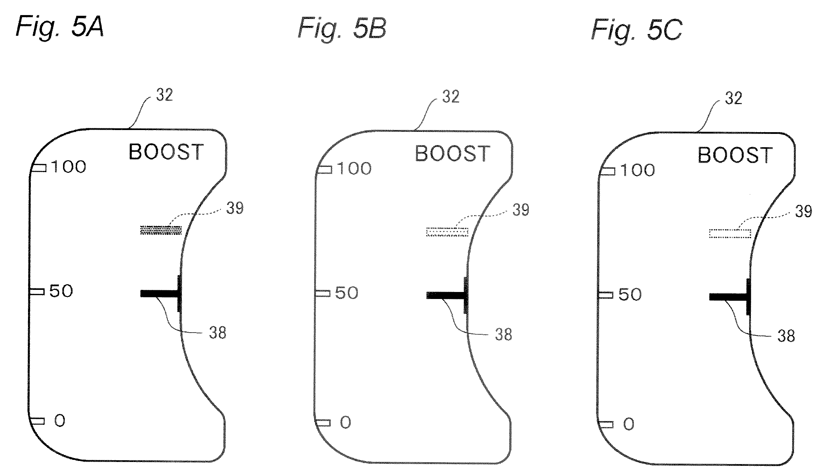

Figs. 5A to 5C are figures which show a display state transition of the second pointer 39 after the graphic controller 106 starts the display of the second pointer 39 in the step S7. It is shown in Figs. 5A to 5C that the opacity of the second pointer 39 changes in accordance with the change pattern shown in Fig. 3. When the elapsed time of the timer 101c reaches 100 milliseconds, the second pointer 39 fades in to be displayed so that the opacity becomes 50% (refer to Fig. 5A). Furthermore, when the elapsed time of the timer 101c passes by, the opacity of the second pointer 39 changes into 25% and 20% (refer to Fig. 5B). When the elapsed time of the timer 101c reaches 100 milliseconds before the 5,000 milliseconds, which is the second time period, the second pointer 39 fades out and disappears so that the opacity becomes 0% (refer to Fig. 5C).

As described above, in the display device of the present embodiment, the present value of the supercharging pressure value is indicated by the first pointer 38, and the maximum value of the supercharging pressure value in the latest time period is indicated by the second pointer 39. In addition, the second pointer 39 is displayed only in the time period from the updated time point until the second time period (five seconds) elapses. Furthermore, the opacity of the second pointer 39 gradually decreases as the elapsed time from the updated time point increases. Thereby, a user can grasp the maximum value of the indicated values, which are measured in the latest time period, and the elapsed time from the time point when the maximum value is measured.

In the processes described above, after time recording with the timer 101c is started in the step S8, and before five seconds after the starting time point elapse, if the present indicated value, which is obtained in the step S3, exceeds the maximum value of the indicated values which is stored in the RAM 101a (YES in the step S5), the maximum value of the indicated values, which is stored in the RAM 101 a, is overwritten by the present indicated value (step S6), and the display of the second pointer 39 starts to indicate the maximum value (step S7). In addition, the elapsed time of the timer 101c is set to a value 0 again, and time recording with the timer 101c is newly started (step S8).

On the other hand, in the five seconds from the starting time point when the time recording with the timer 101 c is started in the step S8, if the present indicated value does not exceed the maximum value of the indicated values which is stored in the RAM 101 a, the maximum value of the indicated values which is stored in the RAM 101 a is reset to a value 0 (step S1). In this case, when an indicated value except 0 is received, the display of the second pointer 39 is started in the step S8.

That is, it can be considered from a different perspective that, in the display device 100 of the present embodiment, the second pointer 39 indicates the maximum value of the indicated values in a latest time period from only a first time period (five seconds in the present embodiment) ago until the present. If the present indicated value exceeds the maximum value of the indicated values in the latest time period, the microcomputer 101 outputs the second pointer 39 to the liquid crystal display 111 in an time period from the exceeding time point (updated time point) until the second time period (five seconds in the present embodiment) elapses, and after the time period, stops outputting. When it is considered in this way, in the present embodiment, the first time, which is set as the length of the latest time period, and the second time period, which is set as the length of the time to output the second pointer 39, are set to the same time.

Thus, in the present embodiment, the first time and the second time period are commonly set to five seconds, but the first time and the second time period may be set to different lengths. For example, it is also possible that the first time is 10 seconds, the second time period is 5 seconds, and if the present indicated value exceeds the maximum value of the indicated values in the latest time period from 10 seconds ago until the present, the second pointer 39 is displayed on the liquid crystal display 111 in an time period from the exceeding time point until five seconds elapses.

(Variation 1)

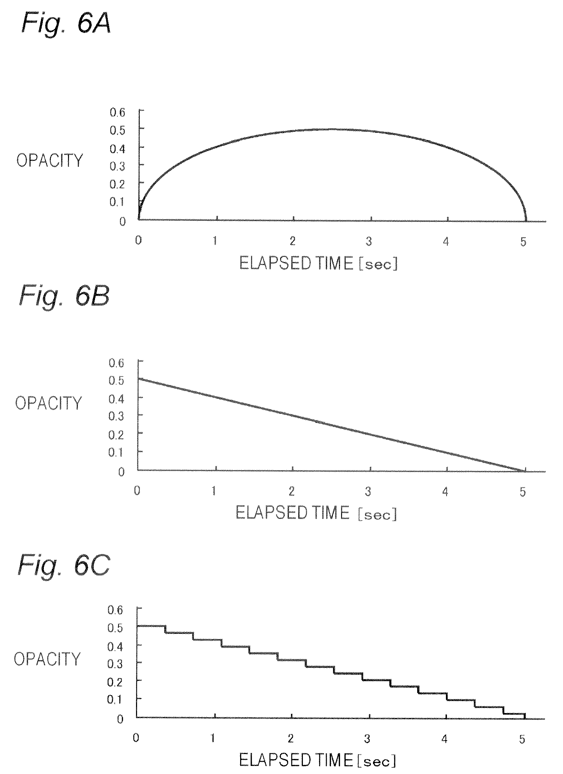

Figs. 6A to 6C are graphs which show other change pattern examples of the opacity. In Fig. 6A, a pattern is shown in which as time elapses, the opacity increases smoothly to become the peak value, and then decreases smoothly to the value 0.

In Fig. 6B, a pattern is shown in which the opacity reaches the peak value immediately after the maximum value is updated, and then decreases to the value 0 in proportion to the elapsed time. In Fig. 6C, like Fig. 6B, a pattern is shown in which the opacity reaches the peak value immediately after the maximum value is updated, and then decreases stepwise to the value 0.

In this way, the change patterns in Figs. 6A to 6C can be used other than the change pattern in Fig. 3 as a change pattern in which the opacity decreases gradually. In addition, because these patterns are registered in the ROM 102b beforehand, a user can arbitrarily select and use a desired pattern through an operation part, which is connected to the microcomputer 101.

(Variation 2)

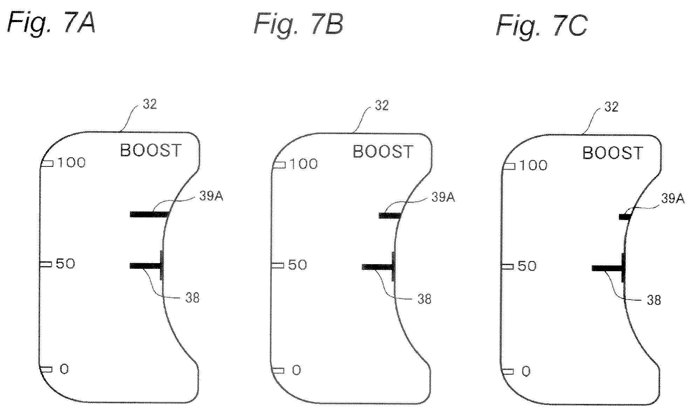

Figs. 7A to 7C are figures which show a transition of the displaying state when the shape of the second pointer 39 changes. In the display example, as shown in Figs. 7A to 7C, the length of the second pointer 39 is gradually shortened in accordance with the lapse of time, and the second pointer 39 fades out and disappears when the elapsed time reaches the second time period.

In this way, like the embodiment described above, instead of (or in addition to) the display manner in which the opacity decreases in the time period from the updated time point until the second time period elapses so that the second pointer 39 will not be displayed, the shape of the second pointer 39 may change in the time period from the updated time point until the second time period elapses. For example, as shown in Figs. 7A to 7C, a manner may be considered in which the length of the second pointer 39 gradually decreases, and a manner also may be considered in which a magnification factor gradually decreases.

In the following, the function and effect of the display device 100 according to the present embodiment are described.

The display device 100 according to the present embodiment includes the image-type liquid crystal display (display part) 111 which displays various information, and is mounted and used in a vehicle. The liquid crystal display 111 outputs the pressure value scale 37 which has marks, the first pointer 38 which points to a part of the pressure value scale 37 with the distal end and indicates the present indicated value of the supercharging pressure value (indicated quantity) which is a state quantity of a vehicle, and the second pointer 39 which points to a part of the pressure value scale 37 with the distal end and indicates the maximum value of the supercharging pressure value in the past given time period.

Therefore, the present indicated value of the supercharging pressure value is indicated by the first pointer 38, and the maximum value of the supercharging pressure value in the past given time period is indicated by the second pointer 39. Therefore, the user can grasp not only the present indicated value of the supercharging pressure value, but also the maximum value in the past given time period. In addition, because the present indicated value and the maximum value are indicated by using the pointers and the scale to scale-display, the user can intuitively grasp the values.

As a result, the display device 100 according to the present embodiment can be provided as such a display device that it is easy for a user to grasp the maximum value of the indicated quantity in the past given time period.

The display device 100 according to the present embodiment further includes the microcomputer (control part) 101 which controls the contents, which are outputted by the liquid crystal display 111 Therefore, the liquid crystal display 111 outputs the second pointer 39 which indicates the maximum value of the supercharging pressure value in the time period from the first time (for example, five seconds) ago until the present. If the present indicated value exceeds the maximum value of the supercharging pressure value in the time period from the first time ago until the present, the microcomputer 101 outputs the second pointer 39 on the liquid crystal display 111 in the time period from the exceeding time point (updated time point) until the second time period (for example, five seconds) elapses, and after the time period, stops outputting.

In this way, the second pointer 39 indicates the maximum value of the supercharging pressure value in the time period from the first time ago until the present. In addition, if the present indicated value of the supercharging pressure value exceeds the maximum value in the time period from the first time ago until the present, the second pointer 39 is displayed on the liquid crystal display 111 in the time period from the exceeding time point until the second time period elapses, and after the time period, will not be displayed. Therefore, a user can grasp not only the present indicated value, but also the maximum value in the time period from the first time ago until the present. In addition, because the second pointer 39 is displayed only in the time period from the time point when the maximum value is exceeded until the second time period elapses, the user can grasp that the second time period elapses from the exceeding time point from the fact that the display of the second pointer 39 is stopped.

In addition, in the display device 100 according to the present embodiment, the microcomputer 101 outputs the second pointer 39 on the liquid crystal display 111 in the time period from the updated time point until the second time period elapses so that the opacity of the second pointer 39 change in accordance with the elapsed time from the updated time point. Alternatively, in the display device 100 according to the variation 2, the microcomputer 101 outputs the second pointer 39 on the liquid crystal display 111 in the time period from the updated time point until the second time period elapses so that the shape of the second pointer 39 changes in accordance with the elapsed time from the updated time point. That is, the microcomputer 101 outputs the second pointer 39 on the liquid crystal display 111 in the time period from the updated time point until the second time period elapses, so that one of the displaying parameters, which control the display form of the second pointer 39, changes in accordance with the elapsed time from the updated time point. Besides the opacity, length and display area described above, color, blinking cycle or the like also may be considered as the displaying parameters.

Therefore, because the opacity or the shape is associated with the elapsed time, a user can grasp the elapsed time from the updated time point from the opacity or the shape of the second pointer 39.

According to the indicate invention, the display device with which it is easy to grasp the maximum value of an indicated quantity in a past given time period can be provided.

The technical scope of the present invention is not limited to the above described embodiments. The above described embodiments can be accompanied by various kinds of modifications or improvements in the technical scope of the present invention.

For example, it is illustrated in the above embodiment that the supercharging pressure value is displayed as an indicated quantity, but any of state quantities of the vehicle can be the indicated quantity. The displaying example described above is suitable for indicating various state quantities such as running speed or fuel gauge value.

In addition, in the above embodiment, when the pointer moves vertically relative to the scale whose marks are vertically given, the present value of the indicated value is indicated, but the present value of the indicated value may be indicated when the pointer moves horizontally relative to a scale whose marks are horizontally given. Besides the horizontal direction, the present value may be indicated relative to a scale whose marks are given in any directions. The scale may be displayed into a straight line shape, and may be displayed into a curved line shape such as a circular arc. In the above embodiment, the pointer is formed into a shape which extends in the horizontal direction, which is perpendicular to the vertical direction in which the scale extends, but the pointer may be so constructed that the distal end points to a part of the scale, and the pointer may be constructed to extend in a direction which intersects with the direction in which the scale extends.

In addition, in the above embodiment, the second pointer indicates the maximum value of the indicated quantity in the latest time period from the first time ago until the present, but the second pointer may indicate the maximum value in a past given time period which is not the latest.

In addition, in the above embodiment, the second pointer 39 is so constructed that the opacity decreases in the time period from the updated time point until the second time period elapses, but the second pointer 39 also may be so constructed that the opacity increases. That is, the opacity may be associated with the elapsed time from the updated time point. However, the display manner in which the opacity decreases and fades out can reduce the burden imposed on a user required for recognition of the elapsed time from the updated time point. Similarly, the shape of the second pointer 39 may be so constructed that the length or the display area increases.

**Claims**

1. A display device (100), comprising:

   an image-type display part (111) configured to output various information, and to be mounted and used in a vehicle,

wherein the display part (111) is configured to output a scale (37) which has marks, a first pointer (38) which points to a part of the scale (37) to indicate a present value of a state quantity of the vehicle, and a second pointer (39) which points to a part of the scale (37) to indicate the maximum value of the state quantity of the vehicle in a first time period on the past,

wherein the display device further comprises:

a control part configured to control information to be outputted by the display part (111), wherein the display part (111) outputs the second pointer (39) which indicates the maximum value of the quantity state in the first time period immediately preceding the present,

wherein, when the present value exceeds the maximum value of the state quantity in the first time period the control part controls the display part (111) to output the second pointer (39) in a second time period beginning from a subsequent time point when the present value exceeds the maximum value, and

wherein the control part controls the display part (111) to stop outputting the second pointer (39) when the second time period has elapsed.

2. The display device (100) according to claim 1, wherein the control part controls the display part (111) to output the second pointer (39) in the second time period from the subsequent time point so that opacity of the second pointer (39) changes in accordance with an elapsed time from the subsequent time point.

3. The display device (100) according to claims 1 or 2, wherein the control part controls the display part (111) to output the second pointer (39) in the second time period from the subsequent time point so that a shape of the second pointer (39) changes in accordance with an elapsed time from the subsequent time point.

**Patentansprüche**

1. Anzeigevorrichtung (100), umfassend:

einen Anzeigeteil (111) vom Abbildungstyp, der dazu konfiguriert ist, verschiedene Informationen auszugeben und in einem Fahrzeug montiert und verwendet zu werden,

wobei der Anzeigeteil (111) dazu konfiguriert ist, eine Skala (37) auszugeben, die Markierungen aufweist, einen ersten Zeiger (38), der auf einen Teil der Skala (37) zeigt, um einen aktuellen Wert einer Statusgröße des Fahrzeugs anzuzeigen, und einen zweiten Zeiger (39), der auf einen Teil der Skala (37) zeigt, um einen Maximalwert der Statusgröße des Fahrzeugs in einer ersten Zeitspanne in der Vergangenheit anzuzeigen,

wobei die Anzeigevorrichtung des Weiteren umfasst:

einen Steuerteil, der dazu konfiguriert ist, Informationen zu steuern, die auf dem Anzeigeteil (111) ausgegeben werden sollen, wobei der Anzeigeteil (111) den zweiten Zeiger (39) ausgibt, der den Maximalwert der Statusgröße in der ersten Zeitspanne anzeigt, die der Gegenwart unmittelbar vorausgeht,

wobei, wenn der aktuelle Wert den Maximalwert der Statusgröße in der ersten Zeitspanne überschreitet, der Steuerteil den Anzeigeteil (111) so steuert, dass er den zweiten Zeiger (39) in einer zweiten Zeitspanne anzeigt, die ab einem nachfolgenden Zeitpunkt beginnt, wenn der aktuelle Wert den Maximalwert überschreitet, und wobei der Steuerteil den Anzeigeteil (111) so steuert, dass er die Ausgabe des zweiten Zeigers (39) stoppt, wenn die zweite Zeitspanne verstrichen ist.

2. Anzeigevorrichtung (100) nach Anspruch 1, wobei der Steuerteil den Anzeigeteil (111) so steuert, dass er den zweiten Zeiger (39) in der zweiten Zeitspanne ab dem nachfolgenden Zeitpunkt so ausgibt, dass sich die Opazität des zweiten Zeigers (39) in Übereinstimmung mit einer verstrichenen Zeit ab dem nachfolgenden Zeitpunkt ändert.

3. Anzeigevorrichtung (100) nach Anspruch 1 oder 2, wobei der Steuerteil den Anzeigeteil (111) so steuert, dass er den zweiten Zeiger (39) in der zweiten Zeitspanne ab dem nachfolgenden Zeitpunkt so ausgibt, dass sich eine Form des zweiten Zeigers (39) in Übereinstimmung mit einer verstrichenen Zeit ab dem nachfolgenden Zeitpunkt ändert.

**Revendications**

1. Dispositif d'affichage (100) comprenant :

   un composant d'affichage de type image (111) configuré pour délivrer en sortie diverses informations et pour être monté et utilisé dans un véhicule,
   dans lequel le composant d'affichage (111) est configuré pour délivrer en sortie une échelle (37) qui comporte des marques, un premier pointeur (38) qui pointe vers une partie de l'échelle (37) afin d'indiquer la valeur actuelle d'une quantité d'état du véhicule, ainsi qu'un second pointeur (39) qui pointe vers une partie de l'échelle (37) pour indiquer la valeur maximale de la quantité d'état du véhicule dans un premier intervalle de temps dans le passé,
   le dispositif d'affichage comprenant en outré :

   un composant de commande configuré pour commander la délivrance en sortie des informations de commande par le composant d'affichage (111),
   le composant d'affichage (111) délivrant en sortie le second pointeur (39) qui indique la valeur maximale de la quantité d'état dans le premier intervalle de temps précédant immédiatement le temps présent,
   où, lorsque la valeur actuelle dépasse la valeur maximale de la quantité d'état dans le premier intervalle de temps, le composant de commande pilote le composant d'affichage (111) pour qu'il délivre en sortie le second pointeur (39) dans un second intervalle de temps débutant à partir d'un point suivant dans le temps lorsque la valeur actuelle dépasse la valeur maximale, et
   où le composant de commande pilote le composant d'affichage (111) pour qu'il arrête de délivrer en sortie le second pointeur (39) lorsque le second intervalle de temps s'est écoulé.

2. Dispositif d'affichage (100) selon la revendication 1,
   dans lequel le composant de commande pilote le composant d'affichage (111) pour qu'il délivre en sortie le second pointeur (39) dans le second intervalle de temps démarrant à partir du point suivant dans le temps de telle sorte que l'opacité du second pointeur (39) change avec le temps écoulé depuis le point suivant dans le temps.

3. Dispositif d'affichage (100) selon la revendication 1 ou la revendication 2,
   dans lequel le composant de commande pilote le composant d'affichage (111) pour qu'il délivre en sortie le second pointeur (39) dans le second intervalle de temps démarrant à partir du point suivant dans le temps de telle sorte que la forme du second pointeur (39) change en fonction du temps écoulé à partir du point suivant dans le temps.

*Fig. 1*

Fig. 2A

Fig. 2B

*Fig. 3*

*Fig. 4*

START

A VALUE 0 IS STORED
IN THE MEMORY — S 1

DOES ELAPSED TIME
OF TIMER EXCEED
SECOND TIME PERIOD? — S 2

YES   NO

AN INDICATED VALUE IS RECEIVED — S 3

THE INDICATED VALUE IS
DISPLAYED AND OUTPUTTED — S 4

S 5 — IS INDICATED VALUE
BIGGER THAN VALUE
STORED IN MEMORY?   NO

YES

THE INDICATED VALUE IS
STORED IN THE MEMORY — S 6

AT A POSITION CORRESPONDING
TO THE VALUE STORED IN THE MEMORY,
THE SECOND POINTER STARTS TO BE OUTPUTTED — S 7

TIME RECORDING WITH
THE TIMER IS STARTED — S 8

Fig. 5A

Fig. 5B

Fig. 5C

*Fig. 6A*

OPACITY

ELAPSED TIME [sec]

*Fig. 6B*

OPACITY

ELAPSED TIME [sec]

*Fig. 6C*

OPACITY

ELAPSED TIME [sec]

Fig. 7A

Fig. 7B

Fig. 7C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 433578 A
- US 2011241861 A1

- JP 2002022573 A